# EUROPEAN PATENT APPLICATION

(11) **EP 2 650 566 A1**
(43) Date of publication of application: **16.10.2013**
(21) Application number: 11846679.6
(22) Date of filing: 29.11.2011
(51) Int. Cl.: F16H 57/027, B60T 5/00, F16D 55/30, F16D 65/847, F16J 15/447

(54) **DRIVE DEVICE AND CONSTRUCTION MACHINE PROVIDED WITH SAME**

(30) Priority: 09.12.2010 JP 2010274465
(71) Applicant: Kobelco Construction Machinery Co., Ltd., Hiroshima 731-5161 (JP)
(72) Inventor: TERAUCHI, Kenichi, Hiroshima 731-5161 (JP)
(74) Representative: TBK
(86) International application number: PCT/JP2011/006628
(87) International publication number: WO 2012/077294

(57) **Abstract**

To obtain a reliable and sufficient air breather function even during an operation on sloping ground while achieving compactness in a height direction and a diametrical direction, the present invention includes a dry brake 16 provided between a motor 1 and a speed reducer 2 and having a brake mechanism for applying a brake to a motor shaft 5 and a brake housing 17 surrounding a brake chamber 18 housing the brake mechanism. The brake housing 17 includes a partition wall 22 that partitions a speed reducer chamber 12 from the brake chamber 18 when penetrated by the motor shaft 5. The partition wall 22 is provided with a shaft sealing mechanism 23 that limits a flow of a lubricating oil O between the partition wall 22 and the motor shaft 5, and an air passage 25 that allows air to flow between the speed reducer chamber 12 and the brake chamber 18 while limiting an inflow of the lubricating oil O into the brake chamber 18 from the speed reducer chamber 12. An air breather for opening the interior of the brake chamber 18 to the atmosphere is formed in the brake 16.

## Description

### Technical Field

The present invention relates to a drive apparatus for reducing speed of a rotation force of a hydraulic or electric motor serving as a drive source using a speed reducer, and transmitting the reduced rotation force to a driven portion such as an upper slewing body in a construction machine such as a shovel.

### Background Art

The related art will now be described, using a slewing drive apparatus for a shovel as an example.

A shovel includes a crawler type lower propelling body, an upper slewing body installed on the lower propelling body rotatably around a shaft vertical to the ground, and a work attachment attached to the upper slewing body.

The shovel also includes a slewing drive apparatus for causing the upper slewing body to slew. The slewing drive apparatus includes a hydraulic or electric motor serving as a drive source, and a speed reducer that reduces speed of a rotation force of the motor and transmits the reduced rotation force to the upper slewing body serving as a driven portion.

The motor includes a motor shaft, and the speed reducer includes a speed reducer output shaft connected to the motor shaft. The motor and the speed reducer are provided in a row in an axial direction of the slewing drive apparatus (to be referred to hereafter as a apparatus-axis direction) such that both center axes (the motor shaft and the speed reducer output shaft) are located along the same line. Further, the motor and the speed reducer are mounted to an upper frame in such a vertical arrangement that the motor is located at a top.

The speed reducer includes a casing surrounding a speed reducer chamber, and a speed reduction mechanism that is provided in the speed reducer chamber and includes at least a single-stage planetary gear mechanism, for example. The planetary gear mechanism includes a sun gear, a planetary gear, and a ring gear. An output of the speed reducer is transmitted to the upper slewing body via a pinion provided on the speed reducer output shaft and a slewing gear provided on a lower frame of the lower propelling body.

Lubricating oil for lubricating the speed reduction mechanism is injected into the speed reducer chamber (the casing). When the drive apparatus is operative, a temperature of the lubricating oil increases, and as a result of this temperature increase, a volume of the lubricating oil expands. Accordingly, an oil level of the lubricating oil rises, and as a result of the rising oil level, the lubricating oil may overflow. Further, when an internal pressure of the speed reducer chamber increases, a structure for sealing the motor shaft that is introduced into the speed reducer chamber may be damaged.

Hence, in a conventional technique (see Patent Documents 1 and 2, for example) for suppressing overflow of the lubricating oil and damage to the structure for sealing the motor shaft, an air chamber provided in a connecting part between the motor and the speed reducer is maintained at a pressure corresponding to atmospheric pressure (this function will be referred to hereafter as an air breather function). More specifically, in this technique, a part (to be referred to hereafter as an air breather) enabling the air chamber to communicate with the outside is provided to maintain the air chamber interior at a pressure corresponding to atmospheric pressure.

Meanwhile, a nacelle slewing drive apparatus for a wind power generation facility described in Patent Document 3 includes a clutch and a brake provided between a motor and a speed reducer, and an air chamber and an air breather disposed on an outer periphery of the clutch and brake.

The technique of providing a dedicated air chamber having an air breather function, as described in Patent Documents 1 and 2, is basically achieved by adding the air chamber between the motor and the speed reducer, and therefore an overall length (overall height) dimension of the device increases. As a result, a large space is required to install the drive apparatus. It is therefore particularly difficult to dispose the drive apparatus described in Patent Documents 1 and 2 in a construction machine such as a shovel, in which a space for installing the drive apparatus is limited in both a height direction and a horizontal direction.

Since the height dimension of the air chamber in an actual device is limited, it is impossible to secure sufficient volume in the air chamber. As a result, the air breather function may not be realized sufficiently.

In the technique described in Patent Document 1, the air chamber is connected to a buffer tank disposed on the outside of the speed reducer by a passage, and therefore an internal volume of the buffer tank is used as a part of the air chamber.

However, the buffer tank is disposed on the outside of the speed reducer on the assumption that since the oil level of the lubricating oil takes the funnel-shape during an operation, the lubricating oil will flow into the buffer tank. During an operation on sloping ground, therefore, the lubricating oil likewise flows into the buffer tank due to a tilt of the construction machine. When, in this condition, the oil temperature is increased by direct sunlight or the like, air in the buffer tank may expand, causing the lubricating oil to overflow.

In other words, the air breather function is not realized sufficiently even with a configuration employing a buffer tank.

Furthermore, since the buffer tank is disposed on the outside of the speed reducer, a diameter dimension of the drive apparatus increases. As a result, a large space is required to install the drive apparatus in a construction machine.

In the technique described in Patent Document 3, meanwhile, the air chamber is formed on the outer periphery of the clutch and brake. Therefore, when an air chamber having a large enough volume to realize a sufficient air breather function is formed, the height direction and diametrical direction dimensions of the drive apparatus increase.

In other words, although the technique described in Patent Document 3 can be put to practical use in a wind power generation facility having substantially no dimensional limitations, the technique cannot easily be applied to a construction machine having severe dimensional limitations, such as a shovel.

Patent Document 1: Japanese Patent Application Publication No. 2008-232270
Patent Document 2: Japanese Patent Application Publication No. 2002-357260
Patent Document 3: Japanese Patent Application Publication No. 2004-232500

### Summary of the Invention

An object of the present invention is to provide a drive apparatus which is compact in a height direction and a diametrical direction and with which a reliable and sufficient air breather function can be obtained even during an operation on sloping ground, and a construction machine including the drive apparatus.

To solve the problems described above, the present invention provides a drive apparatus for a construction machine, including: a hydraulic or electric motor serving as a drive source and having a motor shaft; a speed reducer that includes a speed reducer output shaft for transmitting a force to a driven portion, a speed reduction mechanism that reduces speed of a rotation force of the motor shaft and transmits the reduced rotation force to the speed reducer output shaft, and a casing surrounding a speed reducer chamber in which the speed reduction mechanism is housed and lubricating oil is injected, and is provided below the motor such that the motor shaft and the speed reducer output shaft are arranged along a same line; and a dry brake that is provided between the motor and the speed reducer and includes a brake mechanism for applying a brake to the motor shaft and a brake housing surrounding a brake chamber in which the brake mechanism is housed, wherein the brake housing includes a partition wall that partitions the speed reducer chamber from the brake chamber, the partition wall being penetrated by the motor shaft, the partition wall is provided with a shaft sealing mechanism that limits a flow of the lubricating oil between the partition wall and the motor shaft and an air passage that allows air to flow between the speed reducer chamber and the brake chamber while limiting an inflow of the lubricating oil into the brake chamber from the speed reducer chamber, and an air breather for opening an interior of the brake chamber to the atmosphere is formed in the dry brake.

According to the present invention, a reliable and sufficient air breather function can be obtained even during an operation on sloping ground while achieving compactness in a height direction and a diametrical direction.

### Brief Description of the Drawings

[Fig. 1] Fig. 1 is a sectional view of a slewing drive apparatus according to an embodiment of the present invention.
[Fig. 2] Fig. 2 is a partially enlarged view of Fig. 1.
[Fig. 3] Fig. 3 is a partially enlarged view of Fig. 2.
[Fig. 4] Fig. 4 is a view corresponding to Fig. 2, showing a condition of lubricating oil when a machine is tilted.

### Best Mode for Carrying Out the Invention

An embodiment of the present invention will be described below with reference to the attached drawings. Note that the following embodiment is a specific example of the present invention, and is not intended to limit the technical scope of the present invention.

The embodiment to be described below is applied to a slewing drive apparatus for a shovel.

Note, however, that the present invention may also be applied to another drive apparatus in which a motor and a speed reducer are arranged in a row in a apparatus-axis direction (a vertical direction) such that a motor shaft of the motor and a speed reducer output shaft of the speed reducer are arranged along the same line, and lubricating oil is injected into a casing of the speed reducer.

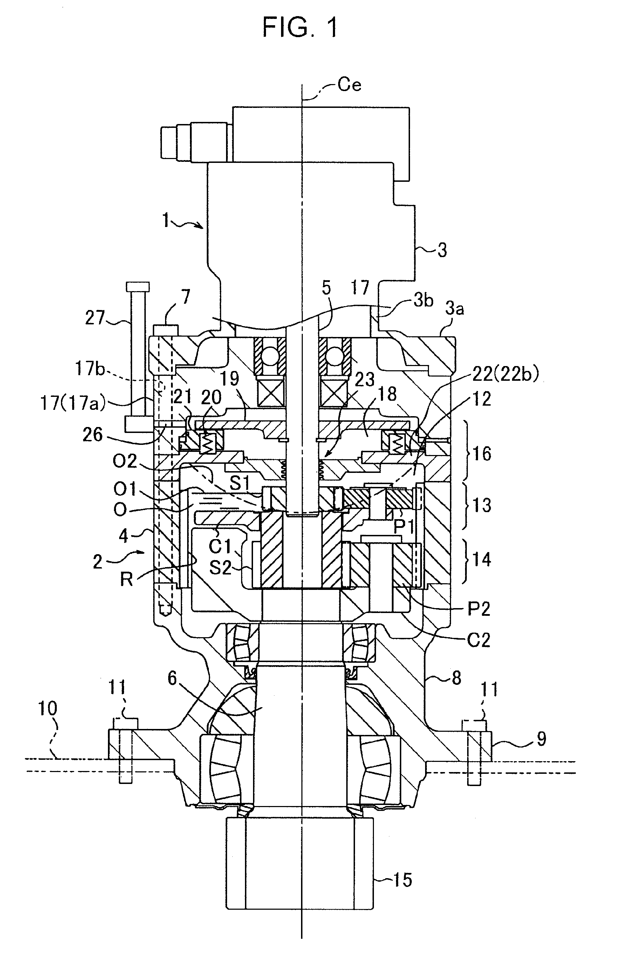

A slewing drive apparatus shown in Fig. 1 includes a hydraulic or electric motor 1 serving as a drive source, a speed reducer 2 that reduces speed of a rotation force of the motor 1 and transmits the reduced rotation force to an upper slewing body serving as a driven portion, and a dry brake 16 provided between the motor 1 and the speed reducer 2.

The motor 1 includes a motor housing 3 and a motor shaft 5 projecting from the motor housing 3. The motor housing 3 includes a tubular housing main body 3b and a flange 3a that projects to an outer periphery from a lower end portion of the housing main body 3b.

The speed reducer 2 includes at least a single-stage planetary gear mechanism (two-stage planetary gear mechanisms are shown in Fig. 1, and therefore a case in which two-stage planetary gear mechanisms are provided will be described below) 13, 14, a casing 4 surrounding a speed reducer chamber 12 in which the planetary gear mechanisms 13, 14 are housed and lubricating oil O is injected, a speed reducer output shaft 6 that is connected to the respective planetary gear mechanisms 13, 14 and projects from the casing 4, and a shaft support portion 8 that supports the speed reducer output shaft 6 rotatably.

The motor 1 and the speed reducer 2 are arranged in a row in a apparatus-axis direction (a vertical direction) such that the motor shaft 5 and the speed reducer output shaft 6 are arranged along the same center line Ce. More specifically, the motor 1 and the speed reducer 2 are mounted to a construction machine in such a vertically arranged state that the motor 1 is located at a top and the motor 1 and the speed reducer 2 are provided in a row in the apparatus-axis direction. The flange 3a provided on the lower end of the motor housing 3 and an upper end of the casing 4 are connected detachably by a plurality of connecting bolts 7.

The shaft support portion 8 is provided on a lower end of the speed reducer 2 (below the casing 4), and has therein a bearing (not having a reference numeral) rotatably supporting the speed reducer output shaft 6. The shaft support portion 8 is provided with an attachment flange 9 that projects to an outer periphery from a lower portion thereof. The attachment flange 9 can be attached to an upper frame 10 of the upper slewing body by a plurality of attachment bolts 11.

The casing 4 houses the two-stage planetary gear mechanisms 13, 14 arranged coaxially. Further, the lubricating oil O is injected into the casing 4 over the substantially whole length of the casing 4. More specifically, the lubricating oil O is injected over a range extending from a bottom surface of the casing 4 to a position slightly below an upper end surface of the casing 4 (a lower end surface of the dry brake 16 to be described below).

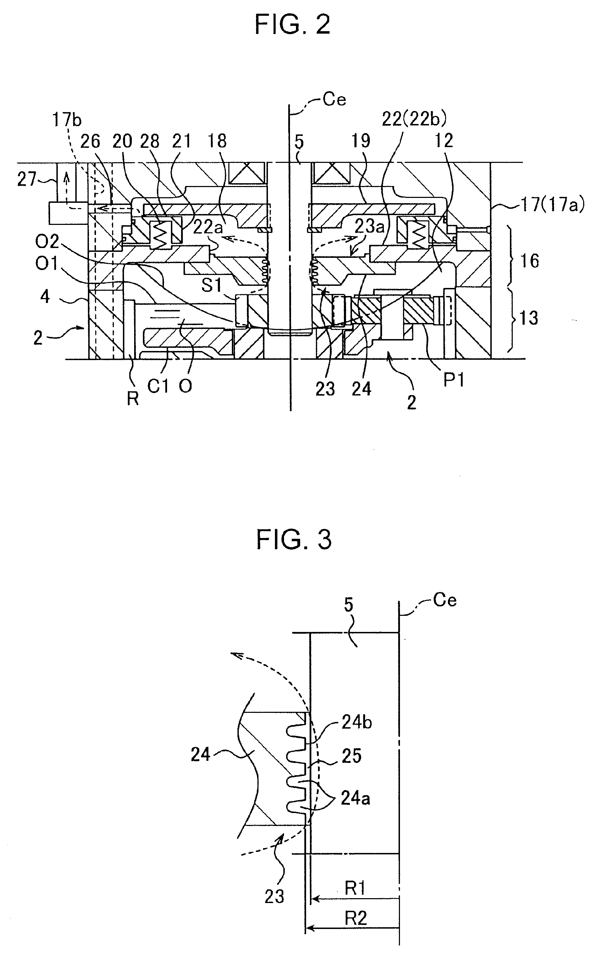

During a stoppage, an oil level of the lubricating oil O is horizontal, as shown by a reference symbol O1 in Figs. 1 and 2. During an operation, on the other hand, an outer peripheral side of the lubricating oil O is raised by a centrifugal force such that the oil level of the lubricating oil O takes the funnel-shape, as shown by a reference symbol 02 in Figs. 1 and 2.

The respective planetary gear mechanisms 13, 14 reduce speed of the rotation force of the motor shaft 5 and transmit the reduced rotation force to the speed reducer output shaft 6. The speed reducer output shaft 6 transmits the rotation force received from the motor shaft 5 to the upper frame 10 (the upper slewing body) serving as the driven portion. More specifically, the planetary gear mechanisms 12, 13 respectively include sun gears S1, S2, carriers C1, C2, pluralities of planetary gears P1, P2 provided around the sun gears S1, S2 via the carriers C1, C2, and ring gears R provided on an inner periphery of the casing 4. The respective planetary gear mechanisms 13, 14 make the planetary gears P1, P2 revolve while making the planetary gears P1 and P2 rotate on their own axes, thereby reducing the speed of the rotation of motor 1. The rotation force, which is reduced in speed, of the motor 1 is transmitted to the speed reducer output shaft 6, and then transmitted to the upper frame 10 through a pinion 15 provided on a lower end of the speed reducer output shaft 6 and a slewing gear (a ring gear, not shown) meshed with the pinion 15.

The dry brake (to be referred to hereafter simply as a brake 16) 16 is provided to apply a braking force to the motor shaft 5. More specifically, as shown in the enlargement of Fig. 2, the brake 16 includes a brake mechanism for applying a brake to the motor shaft 5, and a brake housing 17 surrounding a brake chamber 18 that houses the brake mechanism.

The brake mechanism is a negative brake having a brake disc 19 that is splined to the motor shaft 5 and a brake pad 21 that generates a braking force when pressed against the brake disc 19 by a spring 20. More specifically, when oil pressure is supplied to the brake mechanism from an external oil pressure source, the brake pad 21 separates from the brake disc 19. As a result, the brake disc 19 is released from the braking force.

The brake housing 17 surrounds the brake chamber 18 housing the brake mechanism described above. More specifically, the brake housing 17 includes a peripheral wall 17a surrounding the brake mechanism about the center line Ce, an air breather pipe 27 provided on an outer side of the peripheral wall 17a, and a partition wall 22 projecting inwardly from the peripheral wall 17a. An insertion hole 17b (see Fig. 1) into which the connecting bolt 7 can be inserted is formed within a thickness range of the peripheral wall 17a. The connecting bolt 7 is inserted by screwing in a condition where the peripheral wall 17a is sandwiched between the flange 3a of the motor housing 3 and the casing 4 of the speed reducer 2. As a result, the brake 16 is fixed between the speed reducer 2 and the motor 1.

A tunnel-shaped air breather passage 26 for leading air in the brake chamber 18 to the outside of the brake housing 17 is formed horizontally in the peripheral wall 17a of the brake housing 17. The air breather passage 26 communicates with the outside of the brake housing 17 via the air breather pipe 27. The air breather pipe 27 is formed in the shape of a chimney that extends upward from an outside surface of the peripheral wall 17a.

A connecting passage 28 (see Fig. 2) connecting the brake chamber 18 to the air breather passage 26 is provided between the brake disc 19 and the brake pad 21. More specifically, the connecting passage 28 is provided in at least one of surfaces of the brake disc 19 and the brake pad 21 facing each other.

Thus, the brake chamber 18 is open to the atmosphere via the connecting passage 28, the air breather passage 26, and the air breather pipe 27. In other words, the connecting passage 28, the air breather passage 26, and the air breather pipe 27 together constitute an air breather for realizing an air breather function.

The partition wall 22 partitions the speed reducer chamber 12 from the brake chamber 18 when penetrated by the motor shaft 5. More specifically, the partition wall 22 includes a partition wall main body 22b formed in a ring shape, and a shaft sealing mechanism 23 provided in a central portion of the partition wall main body 22b. A penetration hole 22a (see Fig. 2) that can be penetrated by the motor shaft 5 is formed in the central portion of the partition wall main body 22b along the center line Ce.

The shaft sealing mechanism 23 limits a flow of the lubricating oil O between the partition wall 22 (the partition wall main body 22b) and the motor shaft 5. As shown by the enlargement in Fig. 3, the shaft sealing mechanism 23 according to this embodiment is a non-contact type hermetic sealing mechanism in which a minute space 25 is formed between the shaft sealing mechanism 23 and the motor shaft 5 when the motor shaft 5 is inserted. A specific configuration of the shaft sealing mechanism 23 will be described below.

The shaft sealing mechanism 23 includes a ring-shaped seal plate (a shaft sealing member) 24 that is fixed to the partition wall main body 22b. The seal plate 24 is attached to the partition wall main body 22b so as to block the penetration hole 22a in the condition that flows of the lubricating oil O and air between the partition wall main body 22b and the seal plate 24 are limited. Further, an insertion hole 24b into which the motor shaft 5 can be inserted is formed in the seal plate 24 along the center line Ce. As shown in Fig. 3, an inner diameter dimension R2 of the insertion hole 24b is larger than an outer diameter dimension R1 of the motor shaft 5. Therefore, a gap 25 having a width that corresponds to a difference (R2 - R1) between the respective radii R1, R2 is formed between an inside surface of the insertion hole 24b and an outside surface of the motor shaft 5. The gap 25 forms an air passage (hereafter, the gap 25 will be referred to as an air passage) that allows air to flow between the speed reducer chamber 12 and the brake chamber 18 while limiting inflow of the lubricating oil O into the brake chamber 18 from the speed reducer chamber 12.

Further, a plurality of oil grooves 24a capable of holding the lubricating oil O are formed in the inside surface of the insertion hole 24b in the seal plate 24. In other words, the shaft sealing mechanism 23 constitutes an "oil groove sealing structure".

Note that an oil groove sealing mechanism having oil grooves may also be employed on an outer peripheral surface of the motor shaft 5. A "gap sealing structure" not having oil grooves may also be employed.

Further, a "radial labyrinth sealing structure" in which a labyrinth passage is formed in a radial direction between the motor shaft 5 and the seal plate 24 may be employed. Furthermore, an "aligning labyrinth sealing structure" in which the labyrinth passage is formed so as to be inclined may be employed.

Thus, the partition wall main body 22b and the seal plate 24 constitute a bottom wall of the brake chamber 18. As a result, the speed reducer chamber 12 and the brake chamber 18 are connected by the air passage 25 alone.

Further, a part of an upper surface of the bottom wall of the brake chamber 18 constituted by the partition wall main body 22b and the seal plate 24 is recessed relative to other parts to form a recessed portion 23a. In other words, the recessed portion 23a is formed in the partition wall 22. More specifically, in this embodiment, the seal plate 24 is attached to a lower surface of the partition wall such that a step is formed between the seal plate 24 and the partition wall main body 22b.

Here, the motor shaft 5 is inserted into the seal plate 24 in a region constituting a bottom portion of the recessed portion 23a. In other words, the air passage 25 is formed in the region constituting the bottom portion of the recessed portion 23a.

Next, a flow of air through the slewing drive apparatus will be described. Dotted line arrows in Figs. 2 and 3 represent a flow of air that passes through the brake chamber 18 from the speed reducer chamber 12 and then escapes to the outside. More specifically, the air in the speed reducer chamber 12 is introduced into the brake chamber 18 through the air passage 25, as shown in Fig. 3, as the temperature of the lubricating oil O increases and so on. The air in the brake chamber 18 passes successively through the air breather passage 26 and the air breather pipe 27 via the connecting passage 28 shown in Fig. 2, and is thus led to the outside of the brake housing 17. Air on the outside of the brake housing 17, meanwhile, is introduced into the speed reducer chamber 12 along an opposite path to that described above.

According to this slewing drive apparatus, the brake chamber 18 doubles as an air chamber for realizing an air breather function. Hence, there is no need to add a dedicated air chamber for realizing the air breather function.

Further, for following reasons (i) and (ii), there is no need to enlarge dimensions of the brake chamber 18 in a height direction and a diametrical direction of the slewing drive apparatus beyond required dimensions of a conventional brake chamber.

(i) The brake chamber 18 housing the brake mechanism originally has a large enough volume to realize the air breather function.

(ii) The brake chamber 18 and the speed reducer chamber 12 are defined by the partition wall 22 and the shaft sealing mechanism 23, and therefore inflow of the lubricating oil O into the brake chamber 18 can be limited. As a result, the entire brake chamber 18 can be caused to function as an air chamber.

Hence, a sufficient air breather function can be obtained while achieving compactness in the height direction and the diametrical direction.

Therefore, the slewing drive apparatus can be installed easily even in a construction machine having severe space limitations, such as a shovel.

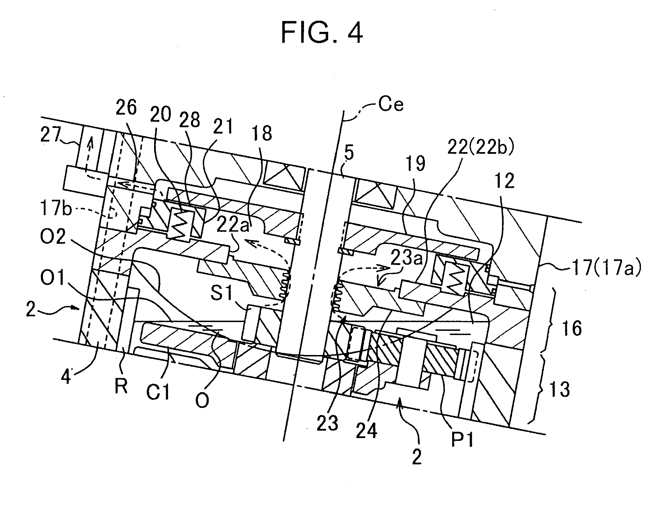

Furthermore, for following reasons (a) to (c), infiltration of the lubricating oil O into the brake chamber 18 can be suppressed. As a result, the air breather function can be secured even during an operation on sloping ground, and overflow of the lubricating oil O can be prevented reliably.
(a) The shaft sealing mechanism 23 is provided in the part of the partition wall 22 penetrated by the motor shaft 5.
(b) Inflow of the lubricating oil is limited by the air passage 25.
(c) As described above, the oil level of the lubricating oil takes the funnel-shape during an operation. In other words, the oil level on the outer peripheral side of the drive apparatus is high, while the oil level on an inner peripheral side is low. In this embodiment, however, the air passage 25 is provided in the partition wall 22 partitioning the speed reducer chamber 12 from the brake chamber 18, and therefore the air passage can be disposed further inward in comparison with the related art, in which a passage is formed on the outer peripheral side of the device. As a result, the risk of the lubricating oil O flowing into the air chamber (the brake chamber 18) is low. In this embodiment in particular, the air passage 25 is provided in the part penetrated by the motor shaft 5, where the oil level of the lubricating oil O is low during an operation, and therefore the likelihood of the brake chamber 18 being infiltrated by the lubricating oil O during an operation can be made extremely small. Moreover, since the air chamber 25 is provided in the part penetrated by the motor shaft 5, the lubricating oil O is unlikely to flow into the brake chamber 18 through the air passage 25 even when the machine is tilted during an operation performed on sloping ground, as shown in Fig. 4.

Hence, overflow of the lubricating oil can be prevented reliably while securing an air breather function at all times, even during an operation performed on sloping ground.

In this embodiment, the air passage 25 is formed in the region constituting the bottom portion of the recessed portion 23a formed in the partition wall 22. Therefore, even if the lubricating oil O flows into the brake chamber 18, the lubricating oil O is highly likely to flow to the bottom portion of the recessed portion 23a and then return to the speed reducer chamber 12 through the air passage 25.

In this embodiment, a non-contact type hermetic sealing mechanism in which the motor shaft 5 is inserted such that the air passage 25 is formed between the sealing mechanism and the motor shaft 5 is cited as a most preferable embodiment. However, instead of or in addition to the air passage 25, an air passage may be provided in the bottom wall of the brake chamber (at least one of the partition wall main body 22b and the seal plate 24). In other words, the air passage 25 may be provided in the partition wall 22.

Likewise in this case, the air passage allows air to flow while limiting inflow of the lubricating oil O between the speed reducer chamber 12 and the brake chamber 18. For example, a labyrinth-shaped air passage, a straight air passage having a small diameter, or the like may be employed.

Further, the speed reduction mechanism of the speed reducer 2 may include only single-stage planetary gear mechanism, and may also include a gear mechanism other than a planetary gear mechanism.

The specific embodiment described above mainly includes inventions having the following configurations.

The present invention provides a drive apparatus for a construction machine, including: a hydraulic or electric motor serving as a drive source and having a motor shaft; a speed reducer that includes a speed reducer output shaft for transmitting a force to a driven portion, a speed reduction mechanism that reduces speed of a rotation force of the motor shaft and transmits the reduced rotation force to the speed reducer output shaft, and a casing surrounding a speed reducer chamber in which the speed reduction mechanism is housed and lubricating oil is injected, and is provided below the motor such that the motor shaft and the speed reducer output shaft are arranged along a same line; and a dry brake that is provided between the motor and the speed reducer and includes a brake mechanism for applying a brake to the motor shaft and a brake housing surrounding a brake chamber in which the brake mechanism is housed, wherein the brake housing includes a partition wall that partitions the speed reducer chamber from the brake chamber, the partition wall being penetrated by the motor shaft, the partition wall is provided with a shaft sealing mechanism that limits a flow of the lubricating oil between the partition wall and the motor shaft and an air passage that allows air to flow between the speed reducer chamber and the brake chamber while limiting an inflow of the lubricating oil into the brake chamber from the speed reducer chamber, and an air breather for opening an interior of the brake chamber to the atmosphere is formed in the dry brake.

According to the present invention, the brake chamber doubles as an air chamber for realizing an air breather function. Hence, there is no need to add a dedicated air chamber for realizing the air breather function.

Further, for following reasons (i) and (ii), there is no need to enlarge the brake chamber in the height direction and the diametrical direction of the drive apparatus.

(i) The brake chamber housing the brake mechanism originally has a large enough volume to realize the air breather function.

(ii) The brake chamber and the speed reducer chamber are defined by the partition wall and the shaft sealing mechanism, and therefore inflow of the lubricating oil into the brake chamber can be limited. As a result, the entire brake chamber can be caused to function as an air chamber.

Hence, a sufficient air breather function can be secured while achieving compactness in the height direction and the diametrical direction. As a result, the drive apparatus can be installed easily even in a construction machine having severe space limitations, such as a shovel.

Furthermore, for following reasons (a) to (c), infiltration of the lubricating oil into the brake chamber can be suppressed. As a result, the air breather function can be secured even during an operation on sloping ground, and overflow of the lubricating oil can be prevented reliably.
(a) The shaft sealing mechanism is provided in the part of the partition wall that is penetrated by the motor shaft.
(b) Inflow of the lubricating oil is limited by the air passage.
(c) As described above, the oil level of the lubricating oil takes the funnel-shape during an operation. In other words, the oil level on the outer peripheral side of the drive apparatus is high, while the oil level on the inner peripheral side is low. According to the present invention, however, the air passage is provided in the partition wall partitioning the speed reducer chamber from the brake chamber, and therefore the air passage can be disposed further inward in comparison with the related art, in which a passage is formed on the outer peripheral side of the device. As a result, the risk of the lubricating oil flowing into the air chamber (the brake chamber) is low.

In the drive apparatus for a construction machine described above, a recessed portion is preferably formed in the partition wall by recessing a part of an upper surface of the partition wall relative to another part thereof, and the air passage is preferably formed in a region constituting a bottom portion of the recessed portion.

According to this aspect, the air passage is formed in the region constituting the bottom portion of the recessed portion. Therefore, even if the lubricating oil infiltrates the brake chamber, the lubricating oil is highly likely to flow to the bottom portion of the recessed portion and then return to the speed reducer chamber through the air passage.

In the drive apparatus for a construction machine described above, the shaft sealing mechanism is preferably a non-contact type hermetic sealing mechanism in which a minute space serving as the air passage is formed between the shaft sealing mechanism and the motor shaft when the motor shaft is inserted.

According to this aspect, the air passage is provided in the part into which the motor shaft is inserted, where the oil level of the lubricating oil during an operation is at a minimum and the lubricating oil is unlikely to infiltrate even in a tilted condition. Therefore, inflow of the lubricating oil into the brake chamber can be limited more reliably, and a flow of air through the air passage can be secured more reliably.

As a result, an even more reliable air breather function can be obtained.

More specifically, the shaft sealing mechanism may include a shaft sealing member in which an insertion hole into which the motor shaft can be inserted is formed, and a diameter of the insertion hole may be made larger than a diameter of the motor shaft.

In the drive apparatus for a construction machine described above, an oil groove capable of holding the lubricating oil is preferably formed in an inside surface of the insertion hole in the shaft sealing member.

According to this aspect, the oil groove is formed in the inside surface of the insertion hole. As a result, the motor shaft can be caused to rotate smoothly relative to the shaft sealing member by the lubricating oil held in the oil groove.

In the drive apparatus for a construction machine described above, the partition wall preferably includes a partition wall main body in which a penetration hole that can be penetrated by the motor shaft is formed, and the shaft sealing member is preferably attached to the partition wall main body so as to block the penetration hole in the condition that flows of the lubricating oil and the air between the partition wall main body and the shaft sealing member are limited.

According to this aspect, the shaft sealing member is attached to the partition wall main body in the condition that the flows of the lubricating oil and the air are limited. As a result, flows of the lubricating oil and the air through parts other than the air passage formed between the insertion hole of the shaft sealing member and the motor shaft can be limited reliably.

In the drive apparatus for a construction machine described above, a recessed portion is preferably formed in the partition wall by recessing a part of an upper surface of the partition wall relative to another part thereof, and the motor shaft is preferably inserted into the shaft sealing mechanism in a region constituting a bottom portion of the recessed portion.

According to this aspect, the motor shaft is inserted into the shaft sealing mechanism in the region constituting the bottom portion of the recessed portion. In other words, the air passage is formed in the region constituting the bottom portion of the recessed portion. Hence, even if the lubricating oil infiltrates the brake chamber, the lubricating oil is highly likely to flow to the bottom portion of the recessed portion and then return to the speed reducer chamber through the air passage.

The present invention also provides a construction machine including: the drive apparatus described above; and a driven portion driven by the force transmitted via the speed reducer.

### Industrial Applicability

According to the present invention, a reliable and sufficient air breather function can be obtained even during an operation on sloping ground while achieving compactness in a height direction and a diametrical direction.

### Explanation of Reference Numerals

- Ce: center line
- O: lubricating oil
- R1: outer diameter dimension of motor shaft
- R2: inner diameter dimension of insertion hole
- 1: motor
- 2: speed reducer
- 4: casing
- 5: motor shaft
- 6: speed reducer output shaft
- 10: upper frame (driven portion)
- 12: speed reducer chamber
- 13, 14: planetary gear mechanism (speed reduction mechanism)
- 16: dry brake
- 17: brake housing
- 18: brake chamber
- 19: brake disc (brake mechanism)
- 20: spring (brake mechanism)
- 21: brake pad (brake mechanism)
- 22: partition wall
- 22a: penetration hole
- 22b: partition wall main body
- 23: shaft sealing mechanism
- 23a: recessed portion
- 24: seal plate (shaft sealing member)
- 24a: oil groove
- 24b: insertion hole
- 25: air passage (gap)
- 26: air breather passage (air breather)
- 27: air breather pipe (air breather)
- 28: connecting passage (air breather)

## Claims

1. A drive apparatus for a construction machine, comprising:
a hydraulic or electric motor serving as a drive source and having a motor shaft;
a speed reducer that includes a speed reducer output shaft for transmitting a force to a driven portion, a speed reduction mechanism that reduces speed of a rotation force of the motor shaft and transmits the reduced rotation force to the speed reducer output shaft, and a casing surrounding a speed reducer chamber in which the speed reduction mechanism is housed and lubricating oil is injected, and is provided below the motor such that the motor shaft and the speed reducer output shaft are arranged along a same line; and
a dry brake that is provided between the motor and the speed reducer and includes a brake mechanism for applying a brake to the motor shaft and a brake housing surrounding a brake chamber in which the brake mechanism is housed,
wherein the brake housing includes a partition wall that partitions the speed reducer chamber from the brake chamber, the partition wall being penetrated by the motor shaft,
the partition wall is provided with a shaft sealing mechanism that limits a flow of the lubricating oil between the partition wall and the motor shaft and an air passage that allows air to flow between the speed reducer chamber and the brake chamber while limiting an inflow of the lubricating oil into the brake chamber from the speed reducer chamber, and
an air breather for opening an interior of the brake chamber to the atmosphere is formed in the dry brake.

2. The drive apparatus for a construction machine according to claim 1, wherein
a recessed portion is formed in the partition wall by recessing a part of an upper surface of the partition wall relative to another part thereof, and
the air passage is formed in a region constituting a bottom portion of the recessed portion.

3. The drive apparatus for a construction machine according to claim 1 or 2, wherein the shaft sealing mechanism is a non-contact type hermetic sealing mechanism in which a minute space serving as the air passage is formed between the shaft sealing mechanism and the motor shaft when the motor shaft is inserted.

4. The drive apparatus for a construction machine according to claim 3, wherein
the shaft sealing mechanism includes a shaft sealing member in which an insertion hole into which the motor shaft can be inserted is formed, and
a diameter of the insertion hole is larger than a diameter of the motor shaft.

5. The drive apparatus for a construction machine according to claim 4, wherein an oil groove capable of holding the lubricating oil is formed in an inside surface of the insertion hole in the shaft sealing member.

6. The drive apparatus for a construction machine according to claim 4 or 5, wherein
the partition wall includes a partition wall main body in which a penetration hole that can be penetrated by the motor shaft is formed, and
the shaft sealing member is attached to the partition wall main body so as to block the penetration hole in the condition that flows of the lubricating oil and the air between the partition wall main body and the shaft sealing member are limited.

7. The drive apparatus for a construction machine according to any one of claims 3 to 6, wherein
a recessed portion is formed in the partition wall by recessing a part of an upper surface of the partition wall relative to another part thereof, and
the motor shaft is inserted into the shaft sealing mechanism in a region constituting a bottom portion of the recessed portion.

8. A construction machine comprising:
the drive apparatus according to any one of claims 1 to 7; and
a driven portion driven by the force transmitted via the speed reducer.
